# EUROPÄISCHE PATENTSCHRIFT

(11) **EP 3 516 465 B1**
(45) Veröffentlichungstag und Bekanntmachung des Hinweises auf die Patenterteilung: **04.12.2019**
(21) Anmeldenummer: 17798188.3
(22) Anmeldetag: 14.11.2017
(51) Int. Cl.: G05B 19/4063

(54) **SICHERHEITSEINRICHTUNG FÜR EINEN ANTRIEBSREGLER**
SAFETY DEVICE FOR A DRIVE CONTROLLER
DISPOSITIF DE SÉCURITÉ POUR RÉGULATEUR D'ENTRAÎNEMENT

(30) Priorität: 18.11.2016 DE 102016122259
(43) Veröffentlichungstag der Anmeldung: 31.07.2019
(73) Patentinhaber: Beckhoff Automation GmbH, 33415 Verl (DE)
(72) Erfinder: ZUTZ, Robert, 33415 Verl (DE); ELLERBROCK, Oliver, 32602 Vlotho (DE); BÜTTNER, Holger, 12157 Berlin (DE)
(74) Vertreter: Patentanwaltskanzlei WILHELM & BECK
(86) Internationale Anmeldenummer: PCT/EP2017/079122
(87) Internationale Veröffentlichungsnummer: WO 2018/091432

(56) Entgegenhaltungen:
- DE-A1- 10 261 452
- US-B2- 8 433 831
- Siemens Ag: "Function Manual SINAMICS S120 Safety Integrated", , 1. Juli 2007 (2007-07-01), Seiten 1-132, XP055440212, Gefunden im Internet: URL:https://cache.industry.siemens.com/dl/ files/838/103498838/att_63554/v1/Function_ Manual_Safety_Integrated_en-US.pdf [gefunden am 2018-01-11]

## Beschreibung

Die Erfindung betrifft ein Antriebssystem mit einer Sicherheitssteuerung.

Diese Patentanmeldung beansprucht die Priorität der deutschen Patentanmeldung DE 10 2016 122 259.3, deren Offenbarungsgehalt hiermit durch Rückbezug aufgenommen wird.

Antriebe setzen sich in der Regel aus einem Motor, einer Leistungselektronik und einem Antriebsregler zusammen. Die Leistungselektronik versorgt den Motor mit dem für die Bewegung erforderlichen Strom. Der Antriebsregler ermittelt aus den Signalen eines Gebers am Motor die Geschwindigkeit und die Position des Motors und führt eine Geschwindigkeits- und Positionsregelung durch eine entsprechende Ansteuerung der Leistungselektronik aus. Eine üblicherweise vorgesehene Sicherheitsbremse im Motor dient ferner dazu, die Position des Motors auch im stromlosen Zustand beispielsweise nach einem Abschalten der Maschine festzuhalten.

Zunehmend wird in den Antriebsregler auch eine Sicherheitseinrichtung mit Sicherheitsfunktionen beispielsweise in Form einer Einsteckkarte integriert. Wesentliche Gefährdungen von Personen ergeben sich an Maschinen aus der dynamischen Bewegungen des Antriebes. Die Integration der Sicherheitseinrichtung mit den Sicherheitsfunktionen in den Antriebsregler ermöglicht gegenüber einer externen Sicherheitssteuerung kurze Reaktionszeiten. Die Sicherheitseinrichtung mit den Sicherheitsfunktionen im Antriebsregler dient dazu, den Motor momentenfrei zu schalten und Geschwindigkeit und Position zu überwachen. Ferner steuert die Sicherheitseinrichtung in der Regel auch die Sicherheitsbremse im Motor.

Jede gewünschte Sicherheitsfunktion ist fest in der Sicherheitseinrichtung des Antriebsreglers eingespeichert und kann durch Parametrierung aktiviert werden. Der Funktionsumfang der Sicherheitsfunktionen ist deshalb festgelegt. Dies hat zu Folge, dass die Sicherheitsfunktionen auf den Entwicklungszeitpunkt der Sicherheitseinrichtung beim Einbau in den Antriebsregler limitiert sind.

Ferner ist der Implementierungsaufwand hoch, da jede Sicherheitsfunktion in der Sicherheitseinrichtung komplett ausprogrammiert werden muss. Das Testen ist außerdem zeitaufwändig, da die Sicherheitsfunktionen mit den vielen unterschiedlichen Parametrierungen vollständig durchgetestet werden müssen.

Eine Erweiterung der Sicherheitsfunktionen durch den Anwender ist außerdem nicht möglich und kann nur über eine Softwareänderung in der Sicherheitseinrichtung von Seiten des Herstellers aus erfolgen. Weiterhin benötigt die Abarbeitung der Sicherheitsfunktionen im Antriebsregler viel Zeit, da immer alle zur Verfügung stehenden Sicherheitsfunktionen durchlaufen werden müssen, auch wenn diese aktuell durch den Anwender nicht verwendet werden.

Eine gattungsgemäße Antriebssystem ist aus der DE 102 61 452 A1 bekannt. Die DE 10 2009 938 060 A1 beschreibt weiter eine Plausibilitätsprüfung von zwei gemessenen Werten bei einem Antrieb. Aus Siemens AG, "Function Manual SINAMICS S120, Safety Integrated", 1. Juli 2017, Seiten 1 - 132, XP055440212 offenbart ein Sicherheitseinrichtung mit fest vorgegebenen Sicherheitsfunktionen.

Aufgabe der Erfindung ist ein Antriebssystem zur Verfügung zu stellen, das eine einfache Implementierung und Erweiterung der Sicherheitsfunktionen ermöglicht.

Die Aufgabe wird mit einem Antriebssystem gemäß Anspruch 1 gelöst. Bevorzugte Weiterbildungen sind in den abhängigen Ansprüchen angeben.

Eine Sicherheitseinrichtung für einen Antriebsregler weist eine Eingabe-Einheit auf, die einen Steuersignalblock, der mit sicheren Eingängen des Antriebsreglers verbunden ist, um über die sicheren Eingänge empfangenen Steuersignale aufzubereiten und als Eingangssignale zur Verfügung zu stellen, und einen Antriebssignalblock, der mit einer Auswerteeinheit des Antriebsreglers verbunden ist, um auf der Grundlage einer ersten Feedback-Information von einem mit dem Antriebsregler verbundenen Motor auf wenigstens einem ersten Kanal eine erste Geschwindigkeit und/oder eine erste Position zu berechnen und ein erstes Geschwindigkeits- und/oder ein erstes Positionssignal zur Verfügung stellen, umfasst. Eine programmierbare Logik-Einheit der Sicherheitseinrichtung ist mit dem Steuersignalblock und dem Antriebssignalblock der Eingabe-Einheit verbunden und weist Logikbausteine auf, die Sicherheitsfunktionen auf der Grundlage der Eingangssignale und des Geschwindigkeits- und/oder des Positionssignals realisieren, um Abschaltsignale bereitzustellen. Weiterhin umfasst die Sicherheitseinrichtung eine Ausgabe-Einheit, die mit der Logik-Einheit und mit sicheren Ausgängen des Antriebsreglers verbunden ist, um die Abschaltsignale auf Sicherheitsabschaltpfade des Antriebsreglers auszugeben.

Die Erfindung beschreibt ein modulares Konzept, mit dem die Sicherheitsfunktionen in einem Antriebsregler realisiert werden können. Dabei besteht die Sicherheitseinrichtung, ausgeführt in Hardware und/oder Software, aus drei logischen Teilen, nämlich der Eingabe-Einheit, der Logik-Einheit und der Ausgabe-Einheit. Erfindungsgemäß wird eine einfache und generische Implementierung der Sicherheitsfunktionen durch den Hersteller ermöglicht. Die Sicherheitsfunktionen lassen sich dabei aus den Logikbausteinen der Logik-Einheit einfach und flexibel zusammensetzen. Die Logikbausteine liegen beispielsweise in der Programmierumgebung vor und der Anwender kann dann aus den Logikbausteinen seine gewünschte Sicherheitsfunktion zusammenbauen und diese dann auf die Logik-Einheit laden. Ferner kann eine Erweiterung der Sicherheitsfunktionen durch den Anwender ohne Aufwand einer Nachzertifizierung durch den Hersteller oder dafür zuständige Prüfstelle durchgeführt werden. Die Sicherheitseinrichtung kann außerdem an beliebige Anwenderanforderungen angepasst werden.

Der Antriebssignalblock der Sicherheitseinrichtung kann ferner einen zweiten Kanal aufweisen, um auf der Grundlage einer zweiten Feedback-Information von dem mit dem Antriebsregler verbundenen Motor eine zweite Geschwindigkeit und/oder eine zweite Position zu berechnen und ein zweites Geschwindigkeits- und/oder ein zweites Positionssignal zur Verfügung zu stellen. Die erste Feedback-Information für den Antriebssignalblock der Sicherheitseinrichtung kann dabei ein Gebersignal vom Motor und die zweite Feedback-Information ein Ansteuersignal für den Motor sein. Durch eine zweikanalige Berechnung von Geschwindigkeit und/oder Position des Motors kann durch Vergleich der Werte auf einfache Weise überprüft werden, ob der Antriebsregler sich in einem gültigen Zustand befindet.

Der zweikanalige Antriebssignalblock der Sicherheitseinrichtung kann ein Prüfsignalmodul aufweisen, das eine Plausibilitätsprüfung der berechneten ersten und zweiten Geschwindigkeit und/oder ersten und zweiten Position durchführt, um zu prüfen, ob der Antriebsregler sich in einem gültigen Zustand befindet. Alternativ kann die Logik-Einheit der Sicherheitseinrichtung einen Prüfsignalbaustein aufweisen, der eine Plausibilitätsprüfung der berechneten ersten und zweiten Geschwindigkeit und/oder ersten und zweiten Position des zweikanaligen Antriebssignalblocks durchführt, um zu prüfen, ob der Antriebsregler sich in einem gültigen Zustand befindet.

Die von der Sicherheitseinrichtung ausführbaren Sicherheitsfunktionen können eine Stopp-Funktion, eine Geschwindigkeitsfunktion, eine Positionsfunktion, eine Beschleunigungsfunktion, Drehmomentfunktion und/oder eine Drehrichtungsfunktion sein. Es bestehen keine oder nur wenige Einschränkungen in Bezug auf die implementierbaren Sicherheitsfunktionen.

Ein Antriebsregler kann mit einer solchen Sicherheitseinrichtung bestückt sein. Die Sicherheitseinrichtung kann dabei als Einsteckkarte für den Antriebsregler ausgebildet sein. Der Antriebsregler lässt sich so auf einfache Weise nachrüsten.

Der Antrieb kann Teil eines Antriebssystems mit einem Motor, einer Leistungselektronik und einer Sicherheitsbremse sein. Die Ausgabe-Einheit der Sicherheitseinrichtung kann einen Ausgang für die Sicherheitsbremse aufweisen. Das Antriebssystem kann weiter mit einer übergeordneten Sicherheitssteuerung über ein Datenübertragungsmedium verbunden sein, wobei das Datenübertragungsmedium mit einem sicherheitsgerichteten Protokoll betrieben wird, um eine Datenaustausch zwischen der Logik-Einheit der Sicherheitseinrichtung im Antriebsregler und der übergeordneten Sicherheitssteuerung zu ermöglichen. Die Logik-Einheit der Sicherheitseinrichtung ist dann ausgelegt, mit einer übergeordneten Sicherheitssteuerung zu kommunizieren und über ein sicherheitsgerichtetes Protokoll Daten auszutauschen. Die Sicherheitseinrichtung des Antriebsreglers kann so auf einfache Weise ohne zusätzlichen Verdrahtung in eine Anlagensteuerung im Rahmen eines Produktions- und Fertigungsprozesses integriert werden.

Die Erfindung wird anhand der beigefügten Zeichnungen näher erläutert.
Fig. 1 zeigt schematisch ein Antriebssystem mit einem Antrieb, der einen Elektromotor und eine Sicherheitsbremse aufweist, und einer übergeordneten Sicherheitssteuerung; und
Fig. 2 einen Prinzipschaltbild einer Antriebreglers mit einer Sicherheitseinrichtung.

Antriebe mit Motoren werden in der Automatisierungstechnik eingesetzt, um Maschinen in Bewegung zu versetzen, etwa bei Verpackungsmaschinen, Werkzeugmaschinen, Umformmaschinen, Transportsystemen oder Robotern. Um einen sicheren Betrieb derartiger Antriebe zu gewährleisten, müssen solche Bewegungen zuverlässig verhindert werden, die ein Sicherheitsrisiko darstellen. Ein Sicherheitsrisiko kann in einer Gefährdung von Bedien- oder Wartungspersonal oder in einer Bewegung liegen, die zu einer Beschädigung der Maschine führt, wie es etwa bei einem ungebremsten Auffahren auf einen Anschlag der Fall sein kann.

Um eine ein Sicherheitsrisiko darstellende Bewegungen zu verhindern, sind Sicherheitsfunktionen in die Steuerung der Antriebe implementiert. Für die Auslegung der Sicherheitsteuerung in den Antrieben gibt es Vorgaben in Form von Normen. So enthält beispielsweise die Norm EN 61508 Richtlinien zur Bewertung der funktionalen Sicherheit elektrischer, elektronischer oder programmgesteuerter Systeme. Die Norm EN ISO 13849 gibt Gestaltungsleitsätze für sicherheitsbezogene Teile von Maschinensteuerungen vor. Die Anforderungen an die funktionale Sicherheit von elektrischen Leistungsantriebssystemen mit einstellbarer Drehzahl, beispielsweise Elektromotoren, sind in der Norm EN 61800-5-2 definiert. In der Norm EN 61800-5-2 sind auch Sicherheitsfunktionen zum sicheren Betrieb derartiger Antriebe beschrieben, beispielsweise eine sichere Stillstandsüberwachung (SOS, Safe Operating Stop) oder ein sicheres Abschalten des den Antrieb antreibenden Moments (STO, Safe Torque Off).

In die Antriebe sind ferner Sicherheitsbremsen implementiert, die das Stillsetzen des Motors beim Abschalten unterstützen, um ein Austrudeln des Motors zu unterbinden. Die Sicherheitsbremse dient ferner dazu, die Position des Motors auch im stromlosen Zustand nach einem Abschalten der Maschine festzuhalten.

Zur Steuerung des Antriebs wird ein Antriebsregler eingesetzt, der die Leistungselektronik, die die für den Betrieb des Motors notwendigen Spannungen und Ströme erzeugt, steuert. Um eine antriebsnahe Steuerung der zentralen Sicherheitsfunktionen durchführen zu können, ist im Antriebsregler eine Sicherheitseinrichtung mit den Sicherheitsfunktionen beispielsweise in Form einer Einsteckkarte integriert. Die Sicherheitseinrichtung mit den Sicherheitsfunktionen im Antriebsregler dient dazu, den Motor momentenfrei zu schalten und die Geschwindigkeit und die Position zu überwachen sowie die Sicherheitsbremse anzusteuern.

Erfindungsgemäß ist die Sicherheitseinrichtung mit den Sicherheitsfunktionen im Antriebsregler modular ausgeführt. Dabei besteht die Sicherheitseinrichtung, ausgeführt in Hardware und/oder Software, aus drei logischen Teilen, nämlich einer Eingabe-Einheit, einer Logik-Einheit und einer Ausgabe-Einheit.

Die Eingabe-Einheit weist zwei Blöcke auf. Ein Steuersignalblock der Eingabe-Einheit stellt ggf. vorhandene sichere Eingänge, wie beispielsweise Hardware-Eingänge auf dem Antriebsregler oder Rückmeldungsinformationen von der Sicherheitsbremse der Logik-Einheit zur Verfügung.

Ein Antriebssignalblock berechnet eine Geschwindigkeit und/oder eine Position auf wenigstens einem ersten Kanal auf der Grundlage einer Feedback-Information beispielsweise eines am Motor vorhandenen Gebers. Der Antriebssignalblock kann weiter die Geschwindigkeit und/oder die Position zusätzlich über einen zweiten Kanal auf der Grundlage einer weiteren FeedbackInformation beispielsweise eines Ansteuersignals für den Motor berechnen. Die berechneten Werte werden an das Logik-Modul weitergeleitet.

Optional kann der zweikanalige Antriebssignalblock ein Prüfsignalmodul aufweisen, das eine Plausibilitätsprüfung der Werte der beiden Kanäle des Antriebssignalblocks durchführt. Mit der Werte-Plausibilisierung wird überprüft, ob der Antriebsregler sich in einem gültigen Zustand befindet. Ist eine solche Plausibilitätsprüfung aktiviert, wird neben den Werten der beiden Kanäle des Antriebssignalblocks auch die Information, ob die Auswertung der Plausibilitätsprüfung erfolgreich war, von dem Prüfsignalmodul des Antriebssignalblocks an die Logik-Einheit übermittelt.

Die Logik-Einheit der Sicherheitseinrichtung weist freiprogrammierbare Logikbausteine auf, die über einen Sicherheitseditor editiert und auf die Logik-Einheit geladen werden können. Mittels der zur Verfügung stehenden Logikbausteine kann der Anwender die Sicherheitsfunktionen auf der Grundlage der Sicherheitsnormen beispielsweise der IEC 61508 oder der DIN EN 61800-5-2 realisieren und an seine Anforderungen anpassen. Die von der Sicherheitseinrichtung ausführbaren Sicherheitsfunktionen können eine Stopp-Funktion, eine Geschwindigkeitsfunktion, eine Positionsfunktion, eine Beschleunigungsfunktion und/oder eine Drehrichtungsfunktion sein. Es bestehen keine oder nur wenige Einschränkungen in Bezug auf die implementierbaren Sicherheitsfunktionen. Die einzelnen Sicherheitsfunktionen lassen sich dabei auf einfache Weise aus einer Vielzahl von einfachen Logikbausteinen zusammenbauen und auf die Logik-Einheit laden. Die Logikbausteine liegen beispielsweise in der Programmierumgebung vor und der Anwender kann dann aus den Logikbausteinen seine gewünschte Sicherheitsfunktion erstellen und diese in der Logik-Einheit implementieren.

So kann beispielsweise eine Wiederanlaufsperre oder auch eine Überwachung von Ausschalt-Rampen in der Logik-Einheit implementiert sein. Ist die Plausibilitätsprüfung der Werte der beiden Kanäle des Antriebssignalblocks über einen Prüfsignalmodul nicht bereits im Antriebssignalblock erfolgt, wird diese innerhalb der Logik-Einheit mit einem Prüfsignalbaustein realisiert. Ferner ist eine Wiederanlaufsperre, wie auch beispielsweise eine Überwachung der Ausschalt-Rampen in der Logik-Einheit implementiert.

Optional kann die Logik-Einheit mit einer übergeordneten Sicherheitssteuerung kommunizieren und über ein sicherheitsgerichtetes Protokoll Daten austauschen. Alternativ kann die Logik-Einheit auch als Stand-Alone-System arbeiten und beispielsweise die sicheren Eingänge einlesen und direkt daraus die sicheren Ausgänge setzen.

Die Ausgabe-Einheit der Sicherheitseinrichtung bedient und testet Sicherheitsabschaltpfade des Antriebsreglers. Weiterhin sind an der Ausgabe-Einheit auch Ausgänge für beispielsweise die Sicherheitsbremse vorgesehen. Die Ausgabe-Einheit bekommt von der Logik-Einheit dann die Information, ob ein- oder ausgeschaltet werden soll.

Erfindungsgemäß wird eine einfache und generische Implementierung der Sicherheitsfunktionen durch den Hersteller ermöglicht. Ferner ist eine Erweiterbarkeit der Sicherheitsfunktionen durch den Anwender ohne Aufwand einer Nachzertifizierung durch den Hersteller oder einer dafür zuständigen Prüfstelle durchführbar. Die Sicherheitseinrichtung kann außerdem an beliebige Anwenderanforderungen angepasst werden.

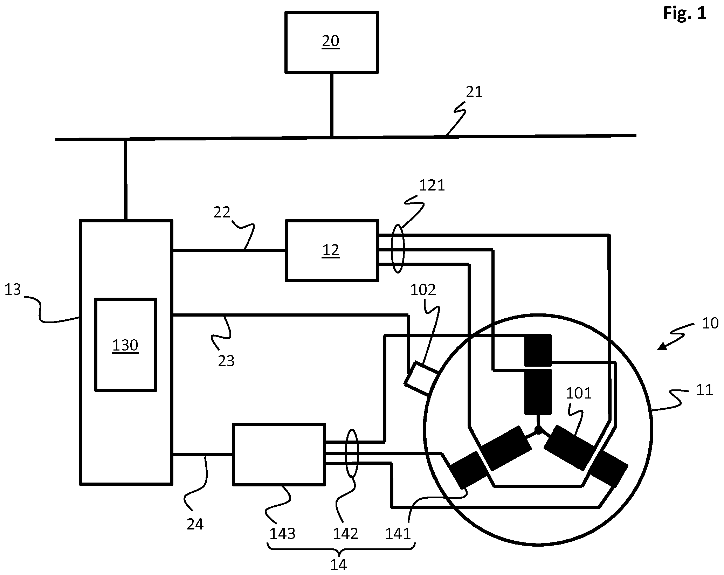

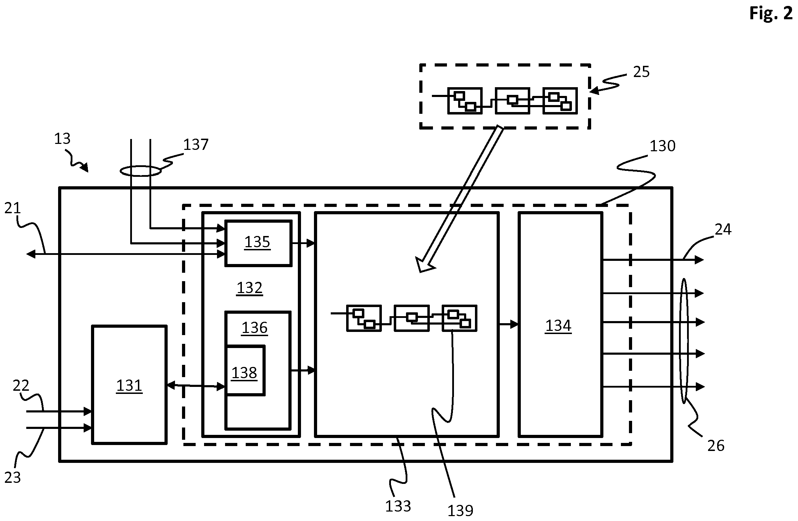

Im Weiteren wird eine Ausführungsform eines Antriebsystems anhand Fig. 1 und eine Ausführungsform eines Antriebreglers mit einer Sicherheitseinrichtung anhand Fig. 2 erläutert.

Figur 1 zeigt ein Antriebssystem mit einem Antrieb 10, der einen Motor, eine Leistungselektronik 12 und einen Antriebsregler 13 umfasst. Der Motor ist in der gezeigten Ausführungsform ein Elektromotor 11 mit einem Antriebswicklungssystem 101, das von der Leistungselektronik 12 über ein elektrisches Antriebsleitungsbündel 121 mit Antriebssignalen, beispielsweise einem geregelten Spannungs- oder Stromsignalen, beaufschlagt wird.

Das Antriebswicklungssystem 101 kann beispielsweise an einem Stator des Elektromotors 11 angeordnet sein. Die Antriebssignale erzeugen in dem Antriebswicklungssystem 101 ein Magnetfeld, das den Elektromotor 11 in Bewegung versetzt, indem es mit einem magnetischen Element des Elektromotors 11, beispielsweise einem Permanentmagneten oder einem Spulen aufweisenden Erregersystem, wechselwirkt. Ist das Antriebswicklungssystem 101 an dem Stator des Elektromotors 11 angeordnet, so kann das magnetische Element beispielsweise an einem beweglichen Rotor des Elektromotors 11 angeordnet sein. Alternativ sind auch eine Anordnung des Antriebswicklungssystems 101 an dem Rotor und eine Anordnung des magnetischen Elements an dem Stator möglich.

Der Elektromotor 11 kann ein Drehfeld- und Wanderfeldmaschine sein. Insbesondere kann es sich bei dem Elektromotor 11, wie in Figur 1 angedeutet, um einen Drehstrommotor handeln. Der Elektromotor 11 kann aber auch ein Linearmotor sein. Alternativ kann der Elektromotor 11 als Stromwender- bzw. Kommutator-Maschine ausgebildet sein.

Die Steuerung des Elektromotors 11 erfolgt durch den Antriebsregler 13, der mit der Leistungselektronik 12 über eine Leistungselektronik-Steuerleitung 22 verbunden ist. Der Antriebsregler 13 kann beispielsweise mittels Steuersignalen eine Pulsweitenmodulation der Antriebssignale in der Leistungselektronik 12 durchführen. Dabei wird zur Variation der Geschwindigkeit und des Drehmoments des Elektromotors 11 der Tastgrad eines periodischen Rechteckpulssignals variiert. Handelt es sich bei dem Elektromotor 11 um einen Drehstrommotor, werden die an den Antriebswicklungen anliegende Antriebssignale so moduliert, dass sich im zeitlichen Mittel das für den Antrieb des Elektromotors 11 benötigte Drehfeld ergibt.

Am Elektromotor 11 ist ein Geber 102 angeordnet, der eine Bewegung des Elektromotors 11 erfasst und ein die Bewegung repräsentierendes Gebersignal über eine Geberleitung 23 an den Antriebsregler 13 sendet. Die Rückmeldung der Bewegung des Elektromotors 11 an den Antriebsregler 13 erlaubt ein Regeln der Bewegung des Elektromotors 11 über einen geschlossenen Regelkreis.

Der Geber 102 wird je nach Motortyp und Anwendungsfall ausgewählt. Beim Elektromotor 11 ist in der Regel ein Drehgeber vorgesehen, der beispielsweise als Resolver, Inkrementalgeber oder Absolutgeber ausgeführt sein kann. Der Antriebsregler 13 vergleicht das Signal des Gebers 102 mit einem vorgegebenen Positions- und/oder Geschwindigkeitssollwert. Liegt eine Abweichung vor, so werden das Drehmoment und/oder die Geschwindigkeit nachgeregelt. Der Geber 102 kann auch mehrere Sensoren umfassen, um verschiedene Größen am Elektromotor 11 zu erfassen und diese in Form von Signalen an den Antriebsregler 13 rückzumelden.

Der Elektromotor 11 weist ein Zusatzwicklungssystem 141 als Teil einer Sicherheitsbremse 14 auf, das mit der Antriebswicklungssystem 101 magnetisch gekoppelt ist. Das Zusatzwicklungssystem 141 ist über elektrisches Bremsleitungsbündel 142 mit der Sicherheitsbremseinheit 143 verbunden, die gleichfalls Teil der Sicherheitsbremse 14 sind. Die Steuerung der Sicherheitsbremse 14 erfolgt durch den Antriebsregler 13, der mit der Sicherheitsbremse 14 über eine Sicherheitsbremse-Steuerleitung 24 verbunden ist.

Die elektrische Sicherheitsbremse 14 kann jedoch auch in anderer Weise in den Elektromotor 11 bzw. in die Leistungselektronik 12 integriert sein. Alternativ kann die Sicherheitsbremse 14 auch als mechanische Betriebs- und Haltebremsen implementiert sein, die den Elektromotor 11 nach Abschalten der Leistungselektronik 12 abbremst und festhält.

Der Antriebsregler 13 umfasst eine Sicherheitseinrichtung 130, die die Funktionen des Antriebsreglers 13 steuert, die für die funktionale Sicherheit des Antriebssystems relevant sind. Dabei kann es sich beispielsweise um eine Überwachung der Bewegung des Elektromotors 11 mithilfe des Gebers 102 handeln. Bei Auftreten eines sicherheitsrelevanten Fehlers kann die Sicherheitseinrichtung 130 die Leistungselektronik 12 sperren und so den Elektromotor 11 momentenfrei schalten. Ferner kann die Sicherheitseinrichtung 130 des Antriebsregler 13 die Sicherheitsbremse 14 auslösen.

Das Antriebssystem ist weiterhin mit einer übergeordneten Sicherheitssteuerung 20 über eine Datenübertragungsleitung 21 verbunden. Die übergeordnete Sicherheitssteuerung 20 kann weitere sicherheitsrelevante Steuerfunktionen in dem Antriebssystem über die Sicherheitseinrichtung 130 im Antriebsregler 13 ausführen. Dazu kann die übergeordnete Sicherheitssteuerung 20 spezielle sichere Hard- und Software umfassen, welche beispielsweise redundant ausgeführt ist. Die übergeordnete Sicherheitssteuerung 20 kann ferner neben sicherheitsrelevanten Steuerfunktionen auch normale Steuerfunktionen durchführen.

Über die Datenübertragungsleitung 21 kann die übergeordnete Sicherheitssteuerung 20 Kommunikationsdaten mit dem Antriebsregler 13 bzw. der Sicherheitseinrichtung 130 im Antriebsregler 13 austauschen. Die Kommunikationsdaten können Messwerte, Statusmeldungen und Steuerbefehle umfassen, welche zur Ausführung der sicherheitsrelevanten bzw. der normale Steuerfunktionen benötigt werden. Die Datenübertragungsleitung 21 kann ein Netzwerkkabel, etwa ein Ethernet-Kabel sein. Die Kommunikation kann beispielsweise auf dem EtherCAT-Standard basieren.

Als sicheres Datenübertragungsprotokoll kann beispielsweise "Safety over EtherCAT" (Fail Safe over EtherCAT, FSoE) eingesetzt werden, wie es in der Norm IEC 61784-3-12 beschrieben ist. Der Einsatz des FSoE-Datenübertragungsprotokolls ermöglicht eine sichere Übertragung von Kommunikationsdaten, die allein auf Sicherheitsmerkmalen (etwa Prüfsummen oder Sequenzzähler) des Datenübertragungsprotokolls selbst basiert und nicht auf einer Absicherung der Datenübertragungsleitung auf physikalischer Ebene beruht.

Fig. 2 zeigt den Antriebsregler 13 mit der Sicherheitssteuerung 130 in Form eines Prinzipschaltbildes. Die Sicherheitsschaltung 130 kann dabei als Einsteckkarte ausgeführt sein, die in einen entsprechenden Schlitz im Antriebsregler 13 eingeschoben werden kann. Die Sicherheitssteuerung 130 kann jedoch auch als Hardware im Antriebsregler 13 selbst zum Beispiel in Form einer anwendungsspezifisch integrierten Schaltung ausgeführt sein. Die Sicherheitseinrichtung 130 kann jedoch auch in Form von Software auf einem Prozessor im Antriebsregler 13 integriert sein.

In Fig. 2 ist als Bauteil des Antriebsreglers 13 neben der Sicherheitseinrichtung 130 noch eine Auswerteeinheit 131, die ein Motormodell des an den Antriebsregler 13 angeschlossenen Motors enthält, gezeigt. Weiterhin dargestellt sind die für die Sicherheitseinrichtung 130 im Antriebsregler 13 notwendigen Ein- und Ausgänge. Der Antriebsregler 13 umfasst aber weitere Bauelemente beziehungsweise Schaltungen sowie Ein- und Ausgänge für die Regelung des Antriebs beziehungsweise zur Kommunikation mit weiteren angeschlossenen Einrichtungen, die zur Vereinfachung der Darstellung nicht gezeigt sind.

Die Sicherheitseinrichtung 130 setzt sich aus einer Eingabe-Einheit 132, einer Logik-Einheit 133 und einer Ausgabe-Einheit 134 zusammen. Die Einheiten können jeweils wieder für sich als eigenständige Hardwareeinheiten ausgeführt sein oder Bestandteile einer integrierten Schaltung. Ferner können die Einheiten jeweils auch in Form von Software auf einem Prozessor implementiert sein.

Die Eingabe-Einheit 132 weist einen Steuersignalblock 135 und einen Antriebssignalblock 136 auf. Der Steuersignalblock 135 ist mit sicheren Eingängen 137 des Antriebsreglers 13 verbunden, um über die sicheren Eingänge vom Antriebsregler 13 empfangene Steuersignale zu erfassen. In Fig. 2 sind zwei sichere Eingänge 137 am Antriebsregler 13 dargestellt. Es können aber weitere sichere Eingänge vorgesehen sein.

Der Steuersignalblock 135 ist weiterhin mit der Datenübertragungsleitung 21 über den entsprechenden Anschluss am Antriebsregler 13 verbunden, um Kommunikationsdaten mit der übergeordneten Sicherheitssteuerung 20 austauschen zu können. Der Steuersignalblock 135 bereitet die über die sicheren Eingänge 137 empfangenen Steuersignale, die zum Beispiel Rückmeldeinformationen der Sicherheitsbremse sein können, sowie die Kommunikationsdaten von der übergeordneten Sicherheitssteuerung 20 auf und stellt sie als Eingangssignale der Logik-Einheit 133 zur Verfügung.

Die Auswerteeinheit 131 des Antriebsreglers 13 ist mit den Feedbackeinrichtungen des Motors verbunden, um Feedbackinformationen zu empfangen und auszuwerten. Bei der in Fig. 2 gezeigten Auslegung sind dabei zwei Feedbackeingänge dargestellt. Der eine Feedbackeingang ist dabei mit der Geberleitung 23 verbunden, um das Gebersignal zu empfangen. Der andere Feedbackeingang ist an die Leistungselektronik-Steuerleitung 22 angeschlossen, um Ansteuersignale für den Motor aufzunehmen.

Die beiden Feedbackinformationen werden von der Auswerteeinheit 131 in den Antriebssignalblock 136 der Eingabeeinheit 132 in der Sicherheitseinrichtung 130 eingespeist. Der Antriebssignalblock 136 berechnet auf der Grundlage der beiden Feedbackinformation jeweils eine Geschwindigkeit und/oder eine Position des Motors. Die beiden berechneten Geschwindigkeits- und/oder Positionswerte werden von dem Antriebssignalblock 136 an die Logik-Einheit 133 weitergeleitet.

Der Antriebssignalblock 136 weist weiter ein Prüfsignalmodul 138 auf, das zusätzlich eine Plausibilitätsprüfung der beiden über den ersten und zweiten Berechnungskanal im Antriebssignalblock bestimmten Geschwindigkeits- und/oder Positionswerte durchführt, um zu prüfen, ob der Antriebsregler 13 sich in einem gültigen Zustand befindet. Dieses Gültigkeitssignal wird zusätzlich zu den beiden Geschwindigkeits- und/oder Positionswerten an die Logik-Einheit 133 übermittelt.

Alternativ kann die Plausiblitätsprüfung jedoch auch erst in der Logik-Einheit 133 erfolgen. Die Logik-Einheit weist dann einen Prüfsignalbaustein (nicht gezeigt) auf, der die beiden Geschwindigkeits- und/oder Positionssignale empfängt und vergleicht, um ein Gültigkeitssignal zu ermitteln.

Neben einem solchen möglichen Prüfsignalbaustein weist die Logik-Einheit 133 weitere frei programmierbare Logikbausteine 139 auf, die die Sicherheitsfunktionen definieren. Die Sicherheitsfunktionen können beispielsweise eine Stoppfunktion, eine Geschwindigkeitsfunktion, eine Positionsfunktion, eine Beschleunigungsfunktion, Drehmomentfunktion oder/ und eine Drehrichtungsfunktion sein.

Die Logikbausteine liegen beispielsweise in der Programmierumgebung vor und der Anwender kann dann aus den Logikbausteinen seine gewünschte Sicherheitsfunktion zusammenbauen und diese auf das Logik-Modul laden.

Die Sicherheitsfunktionen sind über einen Sicherheitseditor 25, der schematisch in Fig. 2 angedeutet ist, editierbar und können in die programmierbaren Logikbausteine 139 der Logik-Einheit 133 eingespeichert werden. Der Sicherheitseditor 25 kann dabei beispielsweise auch Teil der übergeordneten Sicherheitssteuerung 20 sein. Das Laden der programmierten Sicherheitsfunktionen in die Logikbausteine 139 der Logik-Einheit 133 kann dann über die Datenübertragungsleitung 21 erfolgen.

Die Logik-Einheit 133 führt mit den berechneten Geschwindigkeits- und/oder Positionssignalwerten dann die in die Logikbausteine 139 einprogrammierten Sicherheitsfunktionen aus. Dies kann beispielsweise die Überwachung der Beschleunigung, der Position, der Geschwindigkeit, des Drehmoments und/oder der Drehrichtung des Motors sein. Ferner wertet die Logik-Einheit 133 das Gültigkeitssignal der Plausibilitätsprüfung aus.

Die Logik-Einheit 133 erzeugt dann Steuersignale für die Sicherheitseinrichtungen am Motor, wie die Sicherheitsbremse 14 oder auch für die Leistungselektronik 12. Die Steuersignale werden von der Logik-Einheit 133 an die Ausgabe-Einheit 134 der Sicherheitseinrichtung 130 übergeben. An die Ausgabe-Einheit 134 sind Sicherheitsabschaltpfade 26 des Antriebsreglers angeschlossen. In Fig. 2 sind vier Sicherheitsabschaltpfade 26 dargestellt, die von der Ausgabe-Einheit 134 der Sicherheitseinrichtung 130 getestet und mit den Steuersignale der Logik-Einheit 133 beaufschlagt werden.

Ferner ist die Ausgabe-Einheit 134 mit der Sicherheitsbremse-Steuerleitung 24 verbunden, um auf der Grundlage des entsprechenden Steuersignals der Logik-Einheit 133 die Sicherheitsbremse 14 anzusprechen. An die Ausgabe-Einheit 134 können weitere sichere Ausgänge (nicht gezeigt) des Antriebsreglers 13 angeschlossen sein, um Steuersignale der Logikeinheit 133 der Sicherheitseinrichtung 130 auszugeben.

Mit der Erfindung wird ein modulares Konzept für die Sicherheitsfunktionen in einem Antriebsregler 13 realisiert, der eine einfache und generische Implementierung von Sicherheitsfunktionen durch den Hersteller ermöglicht. Die Sicherheitsfunktionen lassen sich vom Anwender auf einfache Weise erweitern und an den jeweiligen Antrieb anpassen.

## Patentansprüche

1. Antriebssystem mit
einem Motor (11), einem Antriebsregler (13) und einer übergeordneten Sicherheitssteuerung (20),
wobei ein Datenübertragungsmedium (21) mit einem sicherheitsgerichteten Protokoll den Antriebsregler (13) mit der übergeordneten Sicherheitssteuerung (20) verbindet,
wobei der Antriebsregler (13)
eine Auswerteeinheit (131), um eine erste Feedback-Information von dem mit dem Antriebsregler (13) verbundenen Motor zu empfangen und auszuwerten,
eine Eingabe-Einheit (132), die einen Steuersignalblock (135), der mit sicheren Eingänge (137) des Antriebsreglers (13) verbunden ist, um über die sicheren Eingänge (137) von der übergeordneten Sicherheitssteuerung (20) empfangenen Steuersignale aufzubereiten und als Eingangssignale zur Verfügung zu stellen,
einen Antriebssignalblock (136), der mit der Auswerteeinheit (131) verbunden ist, um auf der Grundlage der ersten Feedback-Information auf wenigstens einem ersten Kanal eine erste Geschwindigkeit und/oder eine erste Position zu berechnen und ein erstes Geschwindigkeits- und/oder ein erstes Positionssignal zur Verfügung stellt,
eine programmierbare Logik-Einheit (133), die mit dem Steuersignalblock (135) und dem Antriebssignalblock (136) der Eingabe-Einheit (132) verbunden ist und eine Sicherheitsfunktionen auf der Grundlage der Eingangssignale und des Geschwindigkeits- und/oder des Positionssignals realisieren, um Abschaltsignale bereitstellt, und
eine Ausgabe-Einheit (134), die mit der Logik-Einheit (133) und mit sicheren Ausgängen (24, 26) des Antriebsreglers (13) verbunden ist, um die Abschaltsignale auf Sicherheitsabschaltpfade des Antriebsreglers (13) auszugeben, aufweist,
**dadurch gekennzeichnet, dass**
die Sicherheitssteuerung (20) einen Sicherheitseditor (25) aufweist, wobei Logikbausteine (139), die in einer Programmierumgebung vorliegen, über den Sicherheitseditor (25) editiert sind, wobei die Sicherheitsfunktionen eine Stopp-Funktion, eine Geschwindigkeitsfunktion, eine Positionsfunktion, eine Beschleunigungsfunktion und/oder eine Drehrichtungsfunktion sind, die jeweils aus den Logikbausteinen zusammengebaut sind, und
wobei die programmierbare Logik-Einheit (133) die Logikbausteine (139) aufweist, die über den Sicherheitseditor (25) editiert sind und auf die Logik-Einheit über die Datenübertragungsleitung (21) geladen wurden.

2. Antriebssystem nach Anspruch 1, wobei der Antriebssignalblock (136) einen zweiten Kanal aufweist, um auf der Grundlage einer zweiten Feedback-Information von dem mit dem Antriebsregler (13) verbundenen Motor eine zweite Geschwindigkeit und/oder eine zweite Position zu berechnen und der ein zweites Geschwindigkeits- und/oder ein zweites Positionssignal zur Verfügung stellt.

3. Antriebssystem nach Anspruch 2, wobei die erste Feedback-Information ein Gebersignal vom Motor und die zweite Feedback-Information ein Ansteuersignal für den Motor ist.

4. Antriebssystem nach Anspruch 2 oder 3, wobei der zweikanalige Antriebssignalblock (136) ein Prüfsignalmodul (138) aufweist, das eine Plausibilitätsprüfung der berechneten ersten und zweiten Geschwindigkeit und/oder ersten und zweiten Position durchführt, um zu prüfen, ob der Antriebsregler (13) sich in einem gültigen Zustand befindet.

5. Antriebssystem nach Anspruch 2 oder 3, wobei die Logik-Einheit (133) einen Prüfsignalbaustein aufweist, der eine Plausibilitätsprüfung der berechneten ersten und zweiten Geschwindigkeit und/oder ersten und zweiten Position des zweikanaligen Antriebssignalblocks (136) durchführt, um zu prüfen, ob sich der Antriebsregler (13) in einem gültigen Zustand befindet.

6. Antriebssystem nach einem der Ansprüche 1 bis 5, wobei die Logik-Einheit (133) ausgelegt ist, mit der übergeordneten Sicherheitssteuerung (20) zu kommunizieren und über das sicherheitsgerichtetes Protokoll Daten auszutauschen.

7. Antriebssystem nach einem der Ansprüche 1 bis 6, wobei die Ausgabe-Einheit (134) einen Ausgang (24) für eine Sicherheitsbremse (14) aufweist.

8. Antriebssystem nach einem der Ansprüche 1 bis 7, wobei die Sicherheitseinrichtung (130) die als Einsteckkarte für den Antriebsregler (13) ausgebildet ist.

9. Antriebssystem nach einem der Ansprüche 1 bis 8, wobei eine Sicherheitsbremse (14) vorgesehen ist, die mit den sicheren Ausgängen (24) des Antriebsreglers (13) verbunden ist.

## Claims

1. Drive system having
a motor (11), a drive controller (13), and a superordinate safety controller (20),
wherein a data transmission medium (21) having a safety-oriented protocol connects the drive controller (13) to the superordinate safety controller (20),
wherein the drive controller (13) comprises
an evaluation unit (131) in order to receive and evaluate first feedback information from the motor connected to the drive controller (13),
an input unit (132) comprising a control signal block (135) connected to secure inputs (137) of the drive controller (13) in order to use the secure inputs (137) to condition control signals received from the superordinate safety controller (20) and to make said control signals available as input signals,
a drive signal block (136), which is connected to the evaluation unit (131) in order to take the first feedback information as a basis for calculating a first speed and/or a first position on at least one first channel and makes a first speed signal and/or a first position signal available,
a programmable logic unit (133), which is connected to the control signal block (135) and the drive signal block (136) of the input unit (132) and provides a realise safety functions on the basis of the input signals and the speed signal and/or the position signal in order to provide shutdown signals, and
an output unit (134), which is connected to the logic unit (133) and to secure outputs (24, 26) of the drive controller (13) in order to output the shutdown signals to safety shutdown paths of the drive controller (13), **characterized in that**
the safety controller (20) comprises a safety editor (25), wherein logic chips (139) that are present in a programming environment are edited by means of the safety editor (25), wherein the safety functions are a stop function, a speed function, a position function, an acceleration function and/or a direction of rotation function, which are each assembled from the logic chips, and
wherein the programmable logic unit (133) comprises the logic chips (139) that are edited by means of the safety editor (25) and have been loaded onto the logic unit by means of the data transmission line (21).

2. Drive system according to Claim 1, wherein the drive signal block (136) comprises a second channel in order to take second feedback information from the motor connected to the drive controller (13) as a basis for calculating a second speed and/or a second position and which makes a second speed signal and/or a second position signal available.

3. Drive system according to Claim 2, wherein the first feedback information is a transmitter signal from the motor and the second feedback information is an actuation signal for the motor.

4. Drive system according to Claim 2 or 3, wherein the two-channel drive signal block (136) comprises a test signal module (138) that performs a plausibility check on the calculated first and second speeds and/or first and second positions in order to check whether the drive controller (13) is in a valid state.

5. Drive system according to Claim 2 or 3, wherein the logic unit (133) has a test signal chip that performs a plausibility check on the calculated first and second speeds and/or first and second positions of the two-channel drive signal block (136) in order to check whether the drive controller (13) is in a valid state.

6. Drive system according to one of Claims 1 to 5, wherein the logic unit (133) is designed to communicate with the superordinate safety controller (20) and to use the safety-oriented protocol to interchange data.

7. Drive system according to one of Claims 1 to 6, wherein the output unit (134) comprises an output (24) for a safety brake (14).

8. Drive system according to one of Claims 1 to 7, wherein the safety device (130) which is configured as a plug-in card for the drive controller (13).

9. Drive system according to one of Claims 1 to 8, wherein there is provision for a safety brake (14) connected to the secure outputs (24) of the drive controller (13).

## Revendications

1. Système d'entraînement comprenant
un moteur (11), un régulateur d'entraînement (13) et une unité de commande de sécurité de niveau supérieur (20), dans lequel un moyen de transmission de données (21) doté d'un protocole de sécurité relie le régulateur d'entraînement (13) à l'unité de commande de sécurité de niveau supérieur (20),
dans lequel le régulateur d'entraînement (13) comporte une unité d'évaluation (131) pour recevoir et évaluer une première information de rétroaction provenant du moteur relié au régulateur d'entraînement (13),
une unité d'entrée (132) qui comporte un bloc de signaux de commande (135) relié à des entrées sécurisées (137) du régulateur d'entraînement (13) pour traiter des signaux de commande reçus de l'unité de commande de sécurité de niveau supérieur (20) par l'intermédiaire des entrées sécurisées (137) et pour les fournir en tant que signaux d'entrée,
un bloc de signaux d'entraînement (136) qui est relié à l'unité d'évaluation (131) pour calculer une première vitesse et/ou une première position sur la base de la première information de rétroaction sur au moins au moins un premier canal et fournir un premier signal de vitesse et/ou un premier signal de position,
une unité logique programmable (133) qui est reliée au bloc de signaux de commande (135) et au bloc de signaux d'entraînement (136) de l'unité d'entrée (132) et qui fournit une fonctions de sécurité sur la base des signaux d'entrée et du signal de vitesse et/ou du signal de position pour fournir des signaux de désactivation, et une unité de sortie (134) qui est reliée à l'unité logique (133) et à des sorties sécurisées (24, 26) du régulateur d'entraînement (13) pour délivrer les signaux de désactivation sur des trajets de désactivation de sécurité du régulateur d'entraînement (13),
**caractérisé en ce que**
l'unité de commande de sécurité (20) comporte un éditeur de sécurité (25), dans lequel des composants logiques (139) qui sont présents dans un environnement de programmation sont édités par l'intermédiaire de l'éditeur de sécurité (25), dans lequel les fonctions de sécurité sont une fonction d'arrêt, une fonction de vitesse, une fonction de position, une fonction d'accélération et/ou une fonction de sens de rotation, qui sont respectivement réalisées à partir des composants logiques, et
dans lequel l'unité logique programmable (133) comporte les composants logiques (139) qui sont édités par l'intermédiaire de l'éditeur de sécurité (25) et ont été chargés sur l'unité logique par l'intermédiaire de la ligne de transmission de données (21).

2. Système d'entraînement selon la revendication 1, dans lequel le bloc de signaux d'entraînement (136) comporte un second canal pour calculer une seconde vitesse et/ou une seconde position sur la base d'une seconde information de rétroaction provenant du moteur relié au régulateur d'entraînement (13) et qui fournit un second signal de vitesse et/ou un second signal de position.

3. Système d'entraînement selon la revendication 2, dans lequel la première information de rétroaction est un signal de codeur provenant du moteur et la seconde information de rétroaction est un signal de commande destiné au moteur.

4. Système d'entraînement selon la revendication 2 ou 3, dans lequel le bloc de signaux d'entraînement à deux canaux (136) comporte un module de signaux de test (138) qui effectue un contrôle de plausibilité des première et seconde vitesses et/ou des première et seconde positions calculées pour vérifier si le régulateur d'entraînement (13) est dans un état valide.

5. Système d'entraînement selon la revendication 2 ou 3, dans lequel l'unité logique (133) comporte un composant de signal de test qui effectue un contrôle de plausibilité des première et seconde vitesses et/ou des première et seconde positions calculées du bloc de signaux de commande à deux canaux (136) pour vérifier si le régulateur d'entraînement (13) est dans un état valide.

6. Système d'entraînement selon l'une des revendications 1 à 5, dans lequel l'unité logique (133) est conçue pour communiquer avec l'unité de commande de sécurité de niveau supérieur (20) et pour échanger des données par l'intermédiaire du protocole orienté sécurité.

7. Système d'entraînement selon l'une des revendications 1 à 6, dans lequel l'unité de sortie (134) comporte une sortie (24) destinée à un frein de sécurité (14) .

8. Système d'entraînement selon l'une des revendications 1 à 7, dans lequel le dispositif de sécurité (130) qui est réalisé sous la forme d'une carte enfichable destinée au régulateur d'entraînement (13).

9. Système d'entraînement selon l'une des revendications 1 à 8, dans lequel il est prévu un frein de sécurité (14) qui est relié aux sorties sécurisées (24) du régulateur d'entraînement (13).
